# EUROPEAN PATENT SPECIFICATION

(11) **EP 2 941 736 B1**
(45) Date of publication and mention of the grant of the patent: **14.08.2019**
(21) Application number: 13811282.6
(22) Date of filing: 22.11.2013
(51) Int. Cl.: G06K 9/22, G06T 7/00, G10L 13/00

(54) **MOBILE DEVICE BASED TEXT DETECTION AND TRACKING**
AUF MOBILER VORRICHTUNG BASIERENDE TEXTERKENNUNG UND -VERFOLGUNG
SUIVI ET DÉTECTION DE TEXTE À L'AIDE D'UN DISPOSITIF MOBILE

(30) Priority: 04.01.2013 US 201361749248 P; 09.09.2013 US 201314021337
(43) Date of publication of application: 11.11.2015
(73) Proprietor: Qualcomm Incorporated, San Diego, CA 92121-1714 (US)
(72) Inventor: GERVAUTZ, Michael, San Diego, California 92121-1714 (US); KIM, Jieun, San Diego, California 92121-1714 (US); NIELSEN, Per, O., San Diego, California 92121-1714 (US); LAWRENCE ASHOK INIGO, Roy, San Diego, California 92121-1714 (US); PAN, Qi, San Diego, California 92121-1714 (US); TALLONNEAU, Romain, San Diego, California 92121-1714 (US)
(74) Representative: Wegner, Hans
(86) International application number: PCT/US2013/071518
(87) International publication number: WO 2014/107246

(56) References cited:
- US-A1- 2005 286 743
- VICTOR FRAGOSO ET AL: "TranslatAR: A mobile augmented reality translator", APPLICATIONS OF COMPUTER VISION (WACV), 2011 IEEE WORKSHOP ON, IEEE, 5 January 2011 (2011-01-05), pages 497-502, XP031913615, DOI: 10.1109/WACV.2011.5711545 ISBN: 978-1-4244-9496-5
- DANIEL WAGNER ET AL: "Multiple target detection and tracking with guaranteed framerates on mobile phones", MIXED AND AUGMENTED REALITY, 2009. ISMAR 2009. 8TH IEEE INTERNATIONAL SYMPOSIUM ON, IEEE, PISCATAWAY, NJ, USA, 19 October 2009 (2009-10-19), pages 57-64, XP031568944, ISBN: 978-1-4244-5390-0
- BENHIMANE S ET AL: "Real-time image-based tracking of planes using efficient second-order minimization", INTELLIGENT ROBOTS AND SYSTEMS, 2004. (IROS 2004). PROCEEDINGS. 2004 I EEE/RSJ INTERNATIONAL CONFERENCE ON SENDAI, JAPAN 28 SEPT.-2 OCT., 2004, PISCATAWAY, NJ, USA,IEEE, PISCATAWAY, NJ, USA, vol. 1, 28 September 2004 (2004-09-28), pages 943-948, XP010765415, DOI: 10.1109/IROS.2004.1389474 ISBN: 978-0-7803-8463-7

## Description

### CROSS REFERENCE TO RELATED APPLICATIONS

This application claims the benefit of and priority to U.S. Application No. 14/021,337 entitled "Mobile Device Based Text Tracking and Detection," filed September 9, 2013, which, in turn, claims the benefit of and priority to U.S. Provisional Application No. 61/749,248 entitled "Mobile Device Based Text Tracking and Detection," filed January 4, 2013.

### FIELD

The subject matter disclosed herein relates to text detection and tracking.

### BACKGROUND

Increasingly, mobile devices such as smartphones incorporate one or more optical sensors such as cameras along with various other types of sensors. The cameras on mobile devices are often capable of both still and video images. However, the use of mobile devices for applications that involve the scanning of text has been limited because of many challenges. Examples of certain challenges include motion blur from user hand movements, distortions in perspective caused by variations in the orientation of the camera relative to the scanned text and mobile device optical subsystem limitations. For example, video images taken by a mobile device camera may be of low resolution relative to a scanner, and, in addition may suffer from motion blur and perspective distortion. Facilitating quick seamless text detection and tracking can enhance the utility of mobile devices by enabling a broad range of applications that may be able to utilize the output of a text detection and tracking application.

US 2005/0286743 A1 discloses a reading device including a computing device and an image input device coupled to the computing device for capturing low resolution images and high resolution images. The reading machine also includes a computer program product residing on a computer readable medium. The medium is in communication with the computing device and includes instructions to operate in a plurality of modes to optimize performance for specific uses of the reading device and process low and high resolution images during operation of at least one of the plurality of modes.

Therefore, there is a need for apparatus, systems and methods to facilitate text scanning, detection and/or recognition, and/or tracking.

### SUMMARY

The invention is defined in the independent claims. Preferred modifications are defined in the dependent claims.

In one aspect, a method on a Mobile Station (MS) may comprise obtaining a first reference frame by performing Optical Character Recognition (OCR) on an image frame captured by a camera on the MS to locate and recognize a first text block; selecting a subsequent image frame from a set of subsequent image frames, based on parameters associated with the selected subsequent image frame; obtaining a second reference frame by performing OCR on the selected subsequent image frame to recognize a second text block; and determining a geometric relationship between the first and second text blocks based, at least in part, on a position of the first text block in the second reference frame and a camera pose associated with the second reference frame.

In another aspect, an MS may comprise: a camera configured to capture a first image frame and a set of subsequent image frames, and a processor coupled to the camera. The processor may comprise: a word recognition module configured to: obtain a first reference frame by performing Optical Character Recognition (OCR) on the first image frame to locate and recognize a first text block, select a subsequent image frame from the set of subsequent image frames, based on parameters associated with the selected subsequent image frame; and obtain a second reference frame by performing OCR on the selected subsequent image frame to recognize a second text block. The processor may further comprise a text assembler module configured to determine a geometric relationship between the first and second text blocks based, at least in part, on a position of the first text block in the second reference frame and a camera pose associated with the second reference frame.

In a further aspect, an apparatus may comprise: imaging means for capturing a sequence of image frames, means for obtaining a first reference frame by performing Optical Character Recognition (OCR) on an image frame in the sequence of image frames to locate and recognize a first text block, means for selecting a subsequent image frame from the sequence of image frames, the selection based on parameters associated with the selected subsequent image frame, means for obtaining a second reference frame by performing OCR on the selected subsequent image frame to recognize a second text block, and means for determining a geometric relationship between the first and second text blocks based, at least in part, on a position of the first text block in the second reference frame and a pose of the imaging means associated with the second reference frame.

In another aspect, a non-transitory computer-readable medium may comprise instructions, which, when executed by a processor, may perform a method on a Mobile Station (MS), the method may comprise: obtaining a first reference frame by performing Optical Character Recognition (OCR) on an image frame captured by a camera on the MS to locate and recognize a first text block; selecting a subsequent image frame from a set of subsequent image frames, the selection based on parameters associated with the selected subsequent image frame; obtaining a second reference frame by performing OCR on the selected subsequent image frame to recognize a second text block; and determining a geometric relationship between the first and second text blocks based, at least in part, on a position of the first text block in the second reference frame and a camera pose associated with the second reference frame.

Embodiments disclosed also relate to software, firmware, and program instructions created, stored, accessed, read or modified by processors using non transitory computer readable media or computer readable memory.

These and other embodiments are further explained below with respect to the following figures. It is understood that other aspects will become readily apparent to those skilled in the art from the following detailed description, wherein it is shown and described various aspects by way of illustration. The drawings and detailed description are to be regarded as illustrative in nature and not as restrictive.

### BRIEF DESCRIPTION OF THE DRAWINGS

Fig. 1 shows a block diagram of an example MS capable of performing text tracking and detection.
Fig. 2 shows positions of a camera relative to words on a surface and coordinate systems that may be used to track and/or maintain the position of text blocks.
Fig. 3 shows a flowchart for an example method of text detection and tracking consistent with disclosed embodiments.
Fig. 4 shows an example architecture of a system for text tracking consistent with disclosed embodiments.
Fig. 5 shows a flowchart for an example method that may be performed on a mobile station consistent with disclosed embodiments.

### DETAILED DESCRIPTION

Embodiments disclosed herein will be described, by way of example only, with reference to the drawings. The detailed description set forth below in connection with the appended drawings is intended as a description of various aspects of the present disclosure and is not intended to represent the only aspects in which the present disclosure may be practiced. Each aspect described in this disclosure is provided merely as an example or illustration of the present disclosure, and should not necessarily be construed as preferred or advantageous over other aspects. The detailed description includes specific details for the purpose of providing a thorough understanding of the present disclosure. However, it will be apparent to those skilled in the art that the present disclosure may be practiced without these specific details. In some instances, well-known structures and devices are shown in block diagram form in order to avoid obscuring the concepts of the present disclosure. Acronyms and other descriptive terminology may be used merely for convenience and clarity and are not intended to limit the scope of the disclosure.

Mobile device cameras often suffer from drawbacks that limit their applicability. For example, low camera resolution and other optical subsystem limitations may limit the utility of mobile device cameras in conventional scanning and Optical Character Recognition (OCR) related applications. Motion blur from user hand quiver and perspective distortions from camera tilt variations during the scanning process present additional hurdles to using mobile device cameras in conventional text scanning and OCR applications. In addition, to ensure larger relative text size and accurate text capture during scanning the camera is often held closer to the text thereby limiting the number of letters or words that may be captured in a single image or frame. In addition, because conventional OCR may incur significant computational overhead, the use of OCR on a frame by frame basis may be inefficient and impractical for many applications by introducing unacceptable delays.

Embodiments, including apparatus, systems and methods, disclosed herein facilitate efficient continuous text scanning, tracking, and recognition. As used herein, the term mobile station (MS) is used to refer broadly to mobile devices including cellular phones, gaming devices, imaging devices, mobile phones or other wireless communication devices, personal communication system (PCS) devices, personal navigation devices (PND), Personal Information Managers (PIM), Personal Digital Assistants (PDA), laptops etc.

Further, a "mobile station" may omit communication elements and/or functionality. The term "mobile station" is also intended to devices that may not be configured to connect to a network or otherwise communicate, either wirelessly or over a wired connection, with another device. For example, embodiments described herein may be implemented in standalone devices such as a gaming device, hand held camera, or another device that may not be configured to connect to a network or otherwise communicate, either wirelessly or over a wired connection, with another device.

In some embodiments, the mobile station may take the form of mobile device capable of receiving wireless communication and/or navigation signals and communicating with other devices including over short-range wireless, infrared, and/or wireline connections. Also, "mobile station" is intended to include all devices, including wireless communication devices, computers, laptops, etc. which are capable of communication with a server, such as via the Internet, Wi-Fi, or another network.

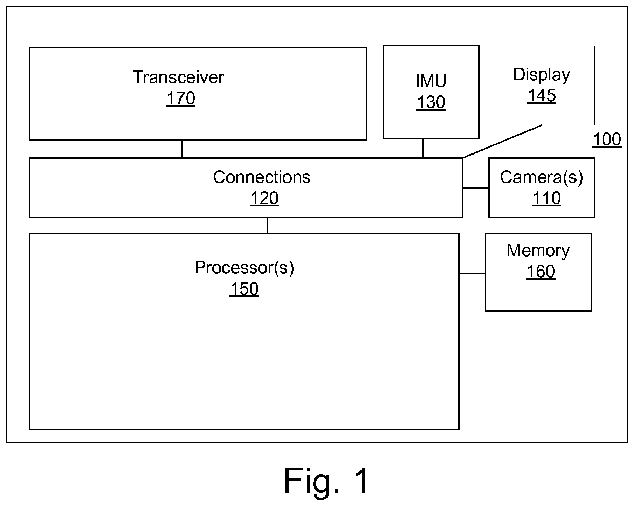

Fig. 1 shows a block diagram of an example MS 100. As shown in Fig. 1, MS 100 may include camera(s) 110, Inertial Measurement Unit (IMU) 130, display 145, processor(s) 150, memory 160 and/or transceiver 170, which may be operatively coupled through connections 120. Connections 120 may comprise buses, lines, fibers, links, etc., or some combination thereof.

Transceiver 170 may, for example, include a transmitter enabled to transmit one or more signals over one or more types of wireless communication networks and a receiver to receive one or more signals transmitted over the one or more types of wireless communication networks. Transceivers 170 may permit communication with wireless networks based on a variety of technologies such as, but not limited to, Wi-Fi networks or Wireless Local Area Networks (WLANs), which may be based on the IEEE 802.11family of standards, Bluetooth, Near Field Communication (NFC), Wireless Wide Area Networks (WWANs) such as LTE, WiMAX, etc. In some embodiments, MS 100 may also include one or more ports for communicating over wired networks. In some embodiments, the transceiver 170 and/or one or more other ports on MS 100 may be omitted.

Camera(s) 110 may send captured images to processor 150. In some embodiments, Cameras 110 may include front-facing and/or rear-facing cameras and/or may also incorporate CMOS/optical sensors. In one embodiment, the front facing camera may face the user during normal user operation of the device, while the rear facing camera may face away from the user during normal operation of the device. In some embodiments, cameras 110 may be capable of capturing both still and video images. Camera(s) 110 may send video images and/or a sequence of still images to processors 150. In one embodiment, images captured by cameras 110 may be in a raw uncompressed format and may be compressed prior to being processed and/or stored in memory 160. In some embodiments, image compression may be performed by processors 150 using lossless or lossy compression techniques.

In some embodiments, processors 150 may also receive input from IMU 130. In some embodiments, IMU 130 may comprise 3-axis accelerometer(s), 3-axis gyroscope(s), and/or magnetometer(s). IMU 130 may provide velocity, orientation, and/or other position related information to processor 150. In some embodiments, IMU 130 may output measured information in synchronization with the capture of each image frame by cameras 110.

Not all modules comprised in MS 100 have been shown in Fig. 1. Example MS 100 may also be modified in various ways in a manner consistent with the disclosure, such as, by adding, combining, or omitting one or more of the functional blocks shown. For example, in some configurations, MS 100 may not include IMU 130. Further, in certain example implementations, MS 100 may include a variety of other sensors (not shown) such as an ambient light sensor, microphones, acoustic sensors, ultrasonic sensors etc. In some embodiments, MS 100 may include a display that may permit live viewing of image frames captured by camera 110. In some embodiments, portions of MS 100 may take the form of one or more chipsets, and/or the like.

Processors 150 may be implemented using a combination of hardware, firmware, and software. Processors 150 may represent one or more circuits configurable to perform at least a portion of a computing procedure or process related to text detection and tracking, Optical Character Recognition (OCR) and/or computer vision and image processing. Processors 150 may retrieve instructions and/or data from memory 160. Processors 150 may be implemented using one or more Graphical Processing Units (GPUs), Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, embedded processor cores, and other electronic units designed to perform the functions described herein, or a combination thereof.

Memory 160 may be implemented within processors 150 and/or external to processors 150. As used herein the term "memory" refers to any type of long term, short term, volatile, nonvolatile, or other memory and is not to be limited to any particular type of memory or number of memories, or type of physical media upon which memory is stored. In some embodiments, memory 160 may hold code to facilitate image processing, text detection and tracking, and other tasks performed by processor 150. For example, memory 160 may hold data, captured still images, video frames, program results, as well as data provided by IMU 130 and other sensors. In general, memory 160 may represent any data storage mechanism. Memory 160 may include, for example, a primary memory and/or a secondary memory. Primary memory may include, for example, a random access memory, read only memory, etc. While illustrated in Fig. 1 as being separate from processors 150, it should be understood that all or part of a primary memory may be provided within or otherwise co-located and/or coupled to processors 150.

Secondary memory may include, for example, the same or similar type of memory as primary memory and/or one or more data storage devices or systems, such as, for example, flash/USB memory drives, memory card drives, disk drives, optical disc drives, tape drives, solid state memory drives, etc. In certain implementations, secondary memory may be operatively receptive of, or otherwise configurable to couple to a non-transitory computer-readable medium in a removable media drive (not shown) coupled to MS 100. In some embodiments, non-transitory computer readable medium may form part of memory 160 and/or processor 150.

MS 100 may also include software to process images captured by camera 110. In some embodiments, processor 150 may be capable running software to process one or more images captured by camera 110 to detect and interpret features in the captured images. For example, processor 150 may be capable of performing Optical Character Recognition (OCR) on the images to recognize text in the images.

In some embodiments, processor 150 may use natural features tracking techniques to register an image and determine camera pose. In computer vision, detection refers to the process of localizing a target object in a captured image frame and computing a camera pose with respect to the object. Tracking refers to camera pose estimation relative to the object over a temporal sequence of image frames. In feature tracking, features may be detected once and then tracked directly in subsequent images using prior information or assumptions about the camera pose. In tracking, the difference in target object positions between consecutive frames is typically small. The pose of a camera refers to the position and orientation of the camera relative to a frame of reference. Registration, image registration or image alignment refers to the process of transforming and/or integrating different data sets into a single coordinate system. Thus, for example, image registration or alignment may be used to determine a geometric transformation that aligns the coordinate systems of two images while minimizing pixel-wise differences between the image pair. In image registration, alignment may involve two images with an arbitrary or relatively large baseline.

Typically, in feature-based tracking methods, features may be used to represent objects. In many conventional feature-based tracking methods, tracking is based on artificial external markers that are then used for localization and tracking. However, conventional methods using extraneous markers are impractical when objects in the natural world such as street signs, labels on objects, or text on various media are scanned. Therefore, embodiments disclosed herein may use inherent features such text-based features, features on a medium on which the text appears, textures, and other distinctive aspects in captured image frames to perform tracking. Tracking without the use of extraneous markers is also referred to as "markerless" tracking. Embodiments disclosed herein facilitate markerless tracking.

Feature-based object tracking may include feature extraction and feature correspondence. Feature extraction refers to the detection of features in an image, while feature correspondence is the process of matching or determining a correspondence between features in two images. Therefore, the use of salient features that are likely to be salient over multiple views under different imaging conditions (e.g. scale, illumination, orientation, etc) facilitates feature correspondence determination.

Thus, in feature based tracking methods, one or more objects may be identified in an image frame and the objects may be tracked across multiple images frames to determine the pose of the camera relative to one or more frames of reference. The tracked object(s) may constitute a target or tracking target. In some embodiments, the target may be tracked using feature points extracted from or associated with the object(s) in the image. For example, an image frame may include multiple objects and interest points may be associated with the image frame, a group of objects and/or individual objects in the image frame. The term "natural" is used to refer to feature points that occur normally in a captured image frame without any artificial or external scene markers.

In some embodiments, the methods disclosed may be performed in real-time or near real-time. In some embodiments, a text recognition process may be started using an initial current image frame. The term "current" as used herein in the context of an image frame refers to an image frame captured by camera 110 and available for contemporaneous viewing by a user. The terms "initial", "prior" and "subsequent" refer to the temporal positions of the image frames relative to one another or relative to a third image frame. In some embodiments, an initial current image frame in which text has been identified and recognized, for example, through an OCR process, may be stored and used as a basis for an image target generation process. An image frame in which text has been identified and recognized is termed a reference frame.

In some embodiments, the image target generation process may then be used to build a tracking model based on the reference frame. In some embodiments, Simultaneous Localization And Mapping (SLAM) techniques, such as Visual SLAM (VSLAM), may be used to track text using various natural features in the reference frame and one or more subsequent image frames that include the text. In some embodiments, feature correspondence between a current image and a reference frame may be used to track text. In some embodiments, SLAM variants such as Parallel Tracking and Mapping (PTAM) may be used for tracking.

In VSLAM, prominent natural features of image patches are tracked across multiple video frames to determine both the positions of the features and the motion of the camera. SLAM based techniques permit the tracking of a 6-Degrees of Freedom (6-DOF) camera pose, which comprises the 3-Dimensional (3D) position (e.g. x, y, z coordinates) and orientation (e.g. angular orientation roll, pitch and yaw) of camera 110, while simultaneously determining the 3-D structure of the surroundings.

In some embodiments, Scale Invariant Feature Transform (SIFT) techniques may be used to identify features such as corner points, edges etc in an image frame. SIFT-based descriptors and variants thereof, which include a variety of computationally efficient modified SIFT descriptors, facilitate robust tracking and feature correspondence between images in the face of relatively large viewpoint changes. In some embodiments, keypoints in an image frame may be identified and local descriptors corresponding to the individual keypoints may be built and used to track image features. A "patch" or "image patch" is a region of pixels around a feature point, which may be used for tracking.

The techniques outlined above are merely examples, and, in some embodiments, various other techniques may be used for feature detection. For example, techniques based on Features from Accelerated Segment Test ("FAST") variants thereof, Speeded-Up Robust Features ("SURF") or variants thereof, hybrid point and/or edge detection techniques, etc may be used for feature detection with appropriate modifications as would be apparent to one of skill in the art.

Further, in some embodiments, an image alignment technique may be used to compute relative motion between the reference image frame and one or more subsequent image frames. The image alignment process computes a measure of alignment between the reference image frame and a current subsequent image frame with respect to motion parameters to estimate object motion. For example, Efficient Second-order Minimization (ESM) may be used to compute the relative motion and/or alignment of a current subsequent frame relative to a reference frame by iteratively minimizing the difference between the reference frame and the current subsequent frame.

The tracking model and/or image alignment processes may yield the position of recognized text and the pose of a current and/or subsequent image frame relative to a reference frame, respectively.

In some embodiments, a patch tracker may then be started and initialized using the position of recognized text obtained from the tracking model and/or the pose of the current subsequent image frame relative to the reference frame obtained from the image alignment processes. The term image patch generally refers to a portion of an image corresponding to a region around a feature point in the image. A patch tracking algorithm may match feature points between a reference image patch and a current image patch extracted from a current image to calculate camera pose relative to the text.

In many Augmented Reality (AR) applications, for example, one or more virtual objects such as text or graphic elements may be superimposed over a live camera view and displayed on display 145. In some embodiments, display 145, may be used to display live images captured by camera 110, AR images, Graphical User Interfaces (GUIs), program output, etc. Display 145 is also referred to as screen. Accurate registration of virtual objects can ensure correct placement of virtual text and/or graphics objects in live video imagery on display 145 when rendering the virtual object. Accordingly, in some embodiments, text being scanned by camera 110 may be tracked so that text blocks can be recognized and processed by one or more applications following text recognition.

The term "text block" is used to refer to a sequence of characters such as, but not limited to, a word, a sequence of words, and/or one or more lines of text. The term "character" is used generally to refer to letters, numbers, and various other symbols regardless of language. In some embodiments, one or more virtual objects may be overlaid over the text blocks based on the results of text detection and tracking. For example, in an AR in-situ text translation application, characters on a medium may be tracked and recognized through an OCR process, translated into another language, and the original text may be overlaid with characters representing the translated text thereby facilitating a live camera view of the translated text. When running AR applications, for example, processor 150 may place a virtual object into a live camera view and the virtual object may be rotated and/or displaced in a captured image to correspond to the pose of the camera.

In some embodiments, one or more natural and/or text based features in an image may be used to determine the pose of MS 100 and/or camera 110 relative to the image. In some embodiments, specific feature points in an image such as points with high contrast difference, edges, and/or corner points may be detected in a frame and used to track the pose of camera 110 across frames. In some embodiments, processors 150 may store pixel-related information pertaining to the feature points. For example, luminance gradient values and/or functions of luminance gradient values associated with feature point pixels may be stored in memory 160. In some embodiments, tracking may be based, in part, on natural features such as the corner points that occur in images of the recognized text.

In some embodiments, the pose of camera 110 relative to an image may be determined or corrected based, in part, on input from IMU 130. In some embodiments, known intrinsic parameters and characteristics of camera 110 such as the focal length of the lens, camera focus distance etc. and/or input from other sensors may be used in conjunction with IMU input and/or other text tracking schemes to assist with and/or refine camera pose determination.

In some embodiments, text tracking may facilitate correlation between geometric positions of previously scanned text blocks with elements currently being scanned. Text tracking may be used to determine the geometric relationships between scanned text blocks thereby permitting reconstruction of the structure of scanned text from the scanned image/frame sequence.

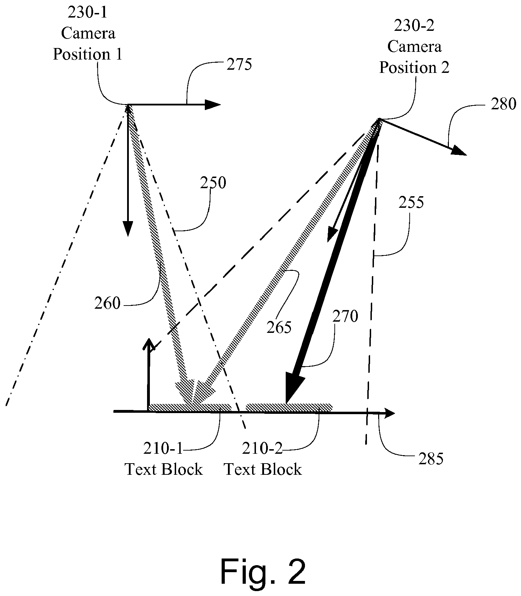

Fig. 2 shows positions of camera 110 relative to words on a medium and coordinate systems that may be used to track and/or maintain the position of text blocks. For example, camera 110 may capture an initial image frame including Text Block-1 210-1 from camera position 230-1. The field of view of camera 110 at camera position 230-1 is the region within dashed lines 250.

In some embodiments, image frame captured at camera position 230-1 may be processed by using OCR to identify one or more characters or words in Text Block 210-1 and to determine an initial pose 260 of Text Block 210-1, relative to frame of reference 275. In some embodiments, frame of reference 275 at camera position 230-1 may comprise a set of orthogonal axes, where one or more of the axes may be aligned with the body of MS 100 and/or the plane of camera 110. For example, in one embodiment, an image frame captured at camera position 230-1 may be stored and used as a reference image frame.

In some embodiments, the pose of text blocks 210 may also be maintained using frame of reference 285, which may represent a "page coordinate system." For example, in a situation where the user holds the camera fronto-parallel to the medium on which text blocks 210 are present, a distinct bounding box may be associated with each text block 210. In some embodiments, a lower left point of recognized Text Block 210-1 and/or a bounding box associated with Text Block 210-1 may be set as the origin of the page coordinate system and a baseline of Text Block 210-1 and/or a baseline of the associated bounding box may be set as the x-axis. The y-axis may be defined as being normal to the x-axis in the camera plane. In some embodiments, frame of reference 285 may be defined based on the first image frame where Text Block 210-1 is recognized and may serve as the page coordinate system for the subsequent image frames.

In some embodiments, a tracking model may be built starting from a reference frame using one or more natural features and/or feature points in the reference image frame and subsequent frames. Once the tracking model has been built, the tracking model may be used to determine the position of recognized text in subsequent frames. For example, camera 110 may move during the scanning process to camera position 230-2 with a field of view shown by the region within dashed lines 255 and frame of reference 280.

As shown in Fig. 2, camera position 230-2 reflects a change in the position and orientation of camera 110 relative to the medium where text blocks 210 are present. In some embodiments, natural features tracking may be used, in part, to obtain an estimate of the 6-DOF pose of camera 110 relative to frame of reference 275. The estimated 6-DOF pose of camera 110 in frame of reference 275 may be used to determine the position of recognized Text Block 210-1 in frame of reference 280.

Further, based, in part, on the characters or a portion thereof recognized in Text Block 1 210-1, in some embodiments, an image alignment technique may be used to compute relative motion of the image between the reference frame of camera position 230-1 and camera position 230-2. For example, image alignment techniques such as ESM may be used to determine the motion of the current image at camera position 230-2 relative to the reference image obtained at camera position 230-1 by using the known estimated position of recognized Text Block 210-1.

A patch tracker may then be initialized using the relative motion of the image measured by the image alignment process and/or a previous reference frame (if a reference frame has been previously generated). The patch tracker may match feature points between a reference image patch and a current image patch extracted from a current image to calculate a refined camera pose relative to the text.

In some embodiments, for example when there is insufficient overlap between the image frame at position 230-1 (or when a reference frame has not yet been generated) and an image frame captured at camera position 230-2, then the image frame captured at position 230-2 may be processed by using OCR to identify one or more characters or words in Text Block 210-1 and Text Block 210-2. The pose 270 of text block 210-2, relative to frame of reference 280 may be determined based on the known pose 265 of Text Block 1 210-1 and based on the relative motion and orientation of camera 110 between positions 230-1 and 230-2 as determined by ESM or another image alignment technique. In some embodiments, the ESM may operate on a lower resolution version of the subsequent image frame. Further, the computed relative motion and orientation of camera 110 between positions 230-1 and 230-2 may also be used to determine the pose of text block 210-2 in terms of frame of reference 285. Thus, the position of the camera relative to the second text block may be used to determine a geometric relationship between the first and second text blocks. Accordingly, in some embodiments, positions of text blocks 210 may be represented in two ways: a relative pose within a camera coordinate system such as (i) a frame of reference 275 and/or 280 and (ii) relative pose within page coordinate system 285.

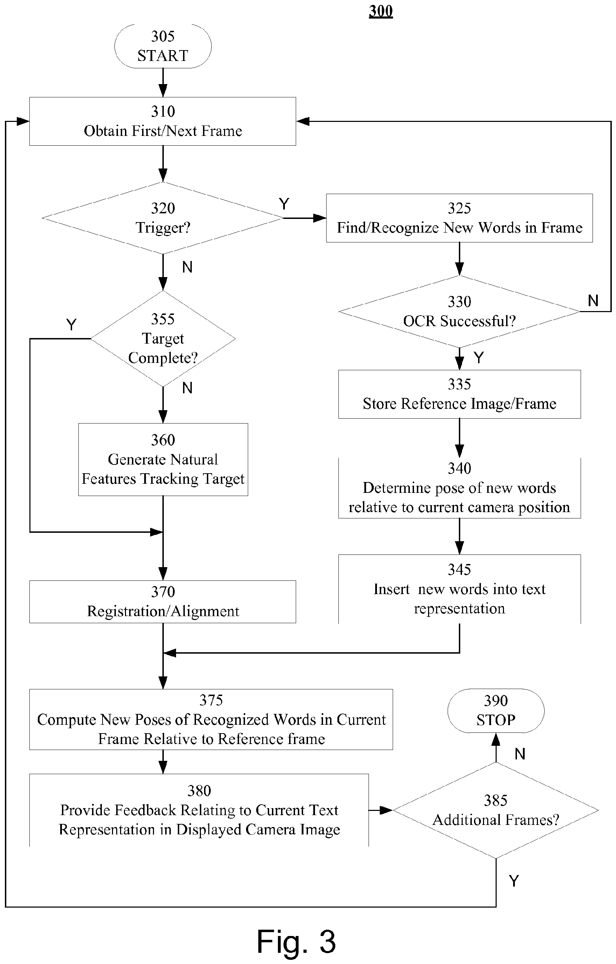

Fig. 3 shows a flowchart for an example method 300 of text detection and tracking consistent with disclosed embodiments. Referring to Fig.3, in some embodiments, method 300 may be invoked by a Computer Vision and/or AR application running on MS 100. In some embodiments, example method 300 may start in 305, where various initialization and housekeeping routines may be performed. Next, in 310, the first or next scanned image frame may be obtained. For example, a user may scan text and/or capture image frames by swiping camera 110 on MS 100 across text on a relatively flat surface such as a page resulting in one or more images or frames that correspond to the scanned text. For example, during the scanning process the user may capture video comprising a temporal sequence of several image frames i.e. the captured frames may form part of a video sequence.

In 320, a trigger event ("Y" in 320) may be used to initiate an OCR process in 325. Triggers may include, for example, detection of an area that has not been previously scanned area in the camera view. An unscanned area may be detected, in some embodiments, from a lack of overlap between a portion of a second scanned image frame relative to a previous reference image and/or a first tracking target. For example, if the lack of overlap exceeds a threshold, OCR in 325 may be triggered.. For example, in 320, if the percentage of overlap area between the current image frame and the first reference frame is below a threshold percentage, then the method may proceed to 325.

In some embodiments, OCR in 325 may be triggered when a relative motion between the first reference frame and the subsequent image frame exceeds a threshold. In some embodiments, the relative motion between the first reference frame and the subsequent image frame may be computed based, in part, on the position of a previously recognized text block in the subsequent image frame and/or using ESM or another image alignment technique. For example, OCR in 325 may be triggered if a magnitude of rotation of the current image frame relative to the first reference frame, and/or a magnitude of translation of the current image frame relative to the first reference frame exceeds some threshold. In some embodiments, if there is no reference frame, for example, when a new image is being scanned and/or when a text scanning or AR application is first started, then OCR in 325 may be automatically triggered.

In one embodiment, an area within the camera image that is "new" relative to the last reference frame may be determined based on the absence of tracked features in the new area. In some embodiments, whenever the new area exceeds a threshold percentage or fraction of the image frame, the method may proceed to 325. In another embodiment, reference camera frames may be projected onto page coordinate system 285 and aligned based on the current camera pose and a new text/OCR recognition event in 325 may be triggered whenever the "new" area on the page plane exceeds a threshold area or a percentage of the area on the page plane covered by the current reference frame.

In a further embodiment, 325 may be triggered when some fraction of one of the last tracked words or a previously recognized text block is outside of the current camera frame. For example, in one embodiment, 325 may be triggered when a fraction of the first text block visible in the current image frame is below some threshold. The visible fraction of the first text block may be determined as a ratio of an area comprising a visible portion of the first text block in the current image frame to a total area of the first text block in the first reference frame.

In some embodiments, if no trigger is detected, ("N" in 320) then, the algorithm may proceed to 355, where a determination may be made to begin/continue generation of a tracking target, or to continue the text tracking process using an existing target.

If a trigger event is detected in 320 ("Y" in 320), then, in 325, the image frame may be processed to find and recognize new words/characters that correspond to the scanned text in the image frame. For example, an OCR application associated with example method 300 may be invoked to process the image frame. In some embodiments, the OCR application in 325 may operate on a text block, such as text blocks 210-1 and/or 210-2. In some embodiments, the size of the text block may be determined based on various parameters such as the amount of text visible in the image frame, available memory 160, speed of the OCR application, the type of AR application, the number and speed of processors 150 etc. In some embodiments, the OCR application may compensate for motion blur from user hand tremors and out-of-focus images.

In 330, it may be determined if the OCR process was successful. In the event that the OCR process was unsuccessful ("N" in 330), the method may return to 310 where the next image frame is obtained. In some embodiments, a visual or audible indication of the error may be provided to a user scanning text with MS 100. In some embodiments, if no words are detected by the OCR application over several images/frames then an autofocus of camera 110 may be triggered.

In some embodiments, if the OCR process was successful ("Y" in 330), then, in 335, the specific camera image/frame for which OCR was successfully performed in 330 and which includes the recognized text block, may be stored as a reference frame. In some embodiments, the reference frame may be stored in memory 160. In some embodiments, the reference frame may be later utilized to initialize the other modules of the tracking system.

In 340, the pose of new words and/or text blocks relative to the current camera position may be determined. For example, the relative position of Text Block 210-2 with respect to frame of reference 280 may be derived. In some embodiments, the pose of new text block 210-2 may be determined, in part, by detecting at least one other previously recognized text block, such as Text Block 1 210-1. For example, based, in part, on the characters recognized in Text Block 210-1, in some embodiments, an image alignment technique such as ESM may be used to compute relative motion of the image. In some embodiments, the ESM may operate on a lower resolution version of the subsequent image frame. Accordingly, the pose of a previously recognized text block relative to the current camera position may be determined based on the alignment. Thus, the pose of newly recognized words relative to the current camera position may be determined based on the determined positions of the previously recognized text blocks. Thus, the position of the camera relative to the second text block may be used to determine a geometric relationship between the first and second text blocks. Based on the determined poses of known and newly recognized text blocks, the poses of new words in page coordinate system 285 may be derived thereby facilitating reconstruction of the structure of scanned text from the scanned image/frame sequence.

Next, in 345, the new words may be inserted into a text representation according to their poses. For example, in one embodiment, each recognized text block may be associated with a bounding box and coordinates in page coordinate system 285 and may be inserted into the text representation based on the coordinates of the recognized text block in the page coordinate system 285. The method may then proceed to 375. In some embodiments, an appropriate data structure may be used to store the text representation.

In some embodiments, if no trigger is detected, ("N" in 320) then, the algorithm may proceed to 355, where a determination is made whether a natural features target has been constructed and is complete. If a natural features target has been constructed and is complete ("Y" in 355), then the method proceeds to 370.

If a tracking target, for example a natural features tracking target, has not been constructed or is incomplete ("N" in 355), then, in 360, the process of generating a tracking target (for example, a natural features tracking target) may be started or continued. In some embodiments, generation of a natural features tracking target may comprise extracting one or more natural features, including text based features in one or more image frames. When the number of extracted interest points for an image is determined to exceed some threshold, or meets some desired level of confidence, the construction of the target may be deemed complete. In some instances, the generation of such a natural feature tracking target make take more than one camera frame because increasing the number of features identified increases the accuracy of later tracking that uses the detected features. In some embodiments, the generation of the natural features tracking target may be performed concurrently with other elements in method 300.

In some embodiments, specific feature points in an image such as points with high contrast difference and/or corner points may be detected in a frame and used to track the pose of camera 110 across frames. In some embodiments, processors 150 may store pixel-related information pertaining to the feature points. For example, gradient values and/or functions of gradient values associated with feature point pixels may be stored in memory 160. In some embodiments, feature vectors of keypoints in a reference frame may be stored in a feature database. In some embodiments, natural features tracking may use a weighting scheme that assigns individual weights to a plurality of feature points. In some embodiments, the weight for each feature point may be based, in part, on the position of the feature point relative to one or more text blocks. For example, a weighting scheme may be centered on a text block and favor features located on the text block over the other features in the camera image frame.

In some embodiments, the extracted features may be assumed to lie on a plane parallel to the camera plane. For example, in instances where text blocks appear on a planar, near-planar or relatively flat surface (such as a magazine page, book, newspaper, product package or street sign) and the camera is being held fronto-parallel to the text, which facilitates better text recognition, natural features tracking may be used build a model where the extracted features may be assumed to lie on a plane parallel to the camera plane. In some embodiments, for a planar target, the method may track the target in 6-DOF with high robustness and changing lighting conditions.

In some embodiments, after the completion of 360, or if a natural feature tracking target exists and is complete, then, the method may proceed to 370. In 370, image alignment techniques such as ESM may be used to determine the motion of the current image at 230-2 relative to the reference image obtained at camera position 230-1. In some embodiments, image alignment / registration techniques such as ESM facilitate measurement of relative motion of the camera with respect to the reference image that was used to trigger text recognition. In some embodiments, lower resolution versions of images captured by the camera may be used as input to ESM and the interframe rotation may be computed in a time-constant manner.

In 375, new or refined poses of recognized words in current frame relative to the reference frame may be computed. In some embodiments, a patch tracker may be started and initialized with an existing or newly generated image target and initialized with current pose computed by image alignment 370. In some embodiments, the patch tracker may receive (i) the reference frame with tracked features and/or (ii) relative motion of camera with respect to the reference image, as input. In some embodiments, the patch tracker may compute the poses of recognized words in current frame relative to the reference frame. For example, the patch tracker may match feature points between a reference image patch and a current image patch extracted from a current image to calculate camera position relative to the text. For example, the patch tracker may be able to determine pose 265 of Text Block 1 210-1, relative to frame of reference 280. In some embodiments, stored feature vectors of keypoints in the reference may be matched with a corresponding feature vector in the current frame. Thus, for example, the poses of new words may be determined relative to camera based co-ordinate system 275 and/or page coordinate system 285.

In 380, the user may be given feedback relating to current text representation in displayed camera image. For example, the recognized text may be highlighted, undergo font change, read out, translated and overlaid over the scanned text, or otherwise represented to a user through a display. In some embodiments, visual or audible feedback may be provided. For example, the recognized words may be read out by a text-to-speech application. In some embodiments, feedback may also be provided when an error occurs.

In some embodiments, in 385, if there are additional frames that are being input ("Y" in 385), then the method returns to 310 to begin another iteration. If there are no additional frames ("N" in 385), the process terminates in 390.

In some embodiments, method 300 may be invoked by an AR application. In some embodiments, the computations to determine pose information from images may be performed in the background (i.e. as a background computational process) while additional image frames are being captured. In some embodiments, determination of camera movement or pose adjustment may be performed using a simultaneous localization and mapping (SLAM) method of procedure. For example, a SLAM procedure may be used at one or more of blocks 360, and/or 375 in order to track a portion of text and/or determine the relative position of the text to the camera or another portion of text.

In some embodiments, method 300 may be performed using some combination of camera 110, processor 150, memory 160 and/or IMU 130 on MS 100. In other embodiments, portions of method 300 may be performed on a server or other computing wirelessly coupled to MS 100. In some embodiments, a server may receive an image from a MS 100, process the image and send the results of the processing to a set of mobile stations designated by an application invoking example method 300. For example, in an in situ text translation scenario, a user may scan text, which may be detected using OCR, tracked, translated into another language and then overlaid on top of the original text based on the text tracking, and sent to one or more users to permit several users to view/share the translated text in a "live camera" view. In another embodiment, text may be scanned using MS 100 and detected and tracked using example method 300 and a text-to-speech application may read the text out using a speaker on or coupled to MS 100. For example, the text-to-speech application may be used by visually-impaired people, or in situations where the text is too small to read easily, or by people who may not have yet learned to read. In some embodiments, the use of natural features tracking may facilitate tracking even short words of text on a blank sheet of paper. Further, the use of textured material may permit greater robustness in text tracking.

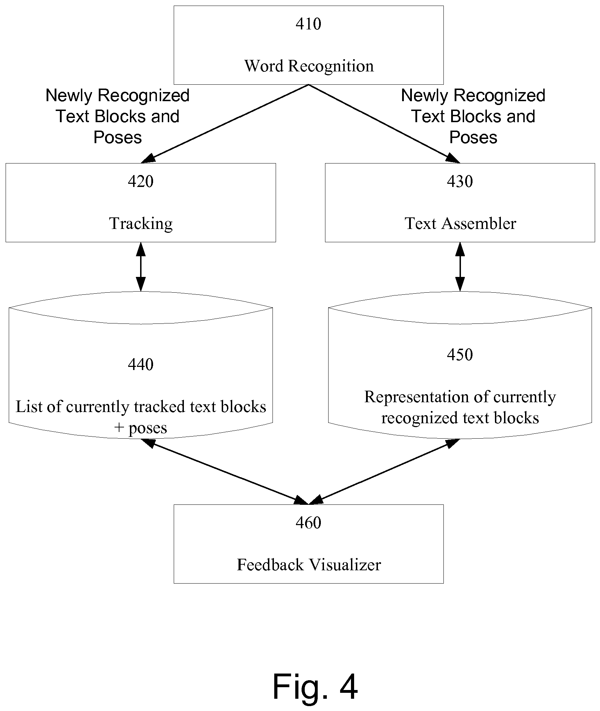

Fig. 4 shows an example architecture 400 of a system for text tracking consistent with disclosed embodiments. The description of example architecture 400 is provided by way of example only and various modifications to the architecture may be made in a manner consistent with disclosed embodiments as would be apparent to one of ordinary skill in the art. For example, the functions of one or more blocks and modules shown in Fig. 4 may be combined, redistributed and/or modified in various ways.

In some embodiments, Word Recognition module 410, Word Tracking module 420, Text Assembler 430 and Feedback Visualizer 460 module may be implemented using hardware, firmware and/or software or some combination thereof on MS 100. In some embodiments, portions of one or more of the above modules may run on processors 150 using code stored in memory 160 and/or embodied in computer-readable media coupled to MS 100.

In some embodiments, system 400 may comprise Word Recognition module 410, Word Tracking module 420, Text Assembler 430 and Feedback Visualizer 460. In some embodiments, Word Recognition Module 410 may comprise an OCR application, which may recognize text blocks in images captured by camera 110. Further, in some embodiments, Word Recognition Module 410 may determine the poses of newly recognized text blocks. In some embodiments, the positions of the newly recognized text blocks may be determined using page coordinate system 285. For example, in one embodiment, Word Recognition Module 410 may comprise an OCR subroutine, which may run on processor 150 to recognize text blocks in images captured by camera 110, and store the recognized text blocks in memory 160.

In some embodiments, Word Recognition module 410 may include dictionaries, Linear Discriminant Analysis (LDA) based classifiers, and finite state transducers. LDA classifiers may use multivariate statistical classification techniques to facilitate OCR by using pixel values and distributions in image frames to recognize characters. Finite state transducers may be used in an OCR correction system to correct recognizer errors. In some embodiments, the finite state transducers may also be used to resolve ambiguities introduced by truncated characters, acronyms, partial words, etc. Image frames with newly recognized text blocks and the poses of the newly recognized text blocks may be sent to Text Assembler 430 and Word Tracking module 420 by Word Recognition module 410. In some embodiments, portions of 320, 325, 330 and 340 in method 300 may be performed by Word Recognition module 410.

In some embodiments, Text Assembler 430 may use the poses of newly recognized text blocks or words to determine their positions relative to previously recognized text blocks or words. In some embodiments, the newly recognized words may then be placed into Representation of Currently Recognized Text Blocks 450 based on their relative positions. For example, Representation of Currently Recognized Text Blocks 450 may take the form of a linked list or an array and newly recognized word may be appended or inserted into the list based on the relative positions. For example, Text Assembler module 430, which may comprise an application or subroutine running on processor 150, may use the poses of newly recognized text blocks or words to determine their positions relative to previously recognized text blocks or words and store Representation of Currently Recognized Text Blocks 450 in memory 160. In some embodiments, portions of 340 and/or 345 in method 300 may be performed by Text Assembler 430.

In some embodiments, Tracking module 420 may use the poses of newly recognized text blocks to create a reference frame. In some embodiments, Tracking module 420 may also generate a tracking target based on the reference image frame and one or more subsequent frames. In some embodiments, Tracking module 420 may include a patch tracker that may use the poses computed by Word Recognition module 410 to refine the pose estimate. In some embodiments, Tracking module 420 may use ESM to obtain an initial pose, which may be used to initialize the patch tracker and obtain a refined pose estimate. In some embodiments, Tracking module 420 may maintain a list of currently tracked words and along with their respective poses 440. In some embodiments, portions of 355, 360, 370 and 375 may be performed by Tracking module 420. In one embodiment, Tracking module 420 may take the form of an application or subroutine running on processor 150.

In some embodiments, Feedback Visualizer 460 may use Representation of Currently Recognized Text 450 and the list of currently tracked words and along with their respective poses 440, to display the words and/or augmented objects overlaid over the text blocks. For example, the augmented objects may include a translation of the recognized text. In some embodiments, the recognized text may be displayed on a display on MS 100 and may be read out using a text-to-voice application through a speaker on or coupled to MS 100. In some embodiments, portions of 380 may be performed by Feedback Visualizer 460. For example, in one embodiment, Feedback Visualizer 460 may take the form of an application or subroutine running on processor 150 and may display words and/or augmented objects overlaid over text blocks using display 145.

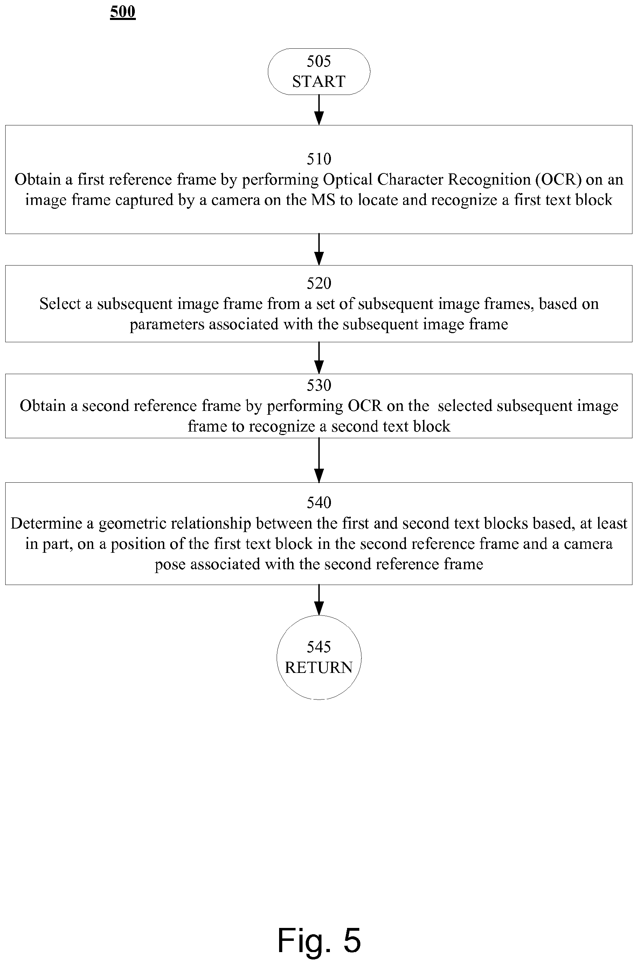

Fig. 5 shows a flowchart for an example method 500 that may be performed on a mobile station consistent with disclosed embodiments. For example, the method may be performed during text detection and tracking in some embodiments.

Referring to Fig.5, in some embodiments, method 500 may be invoked by a Computer Vision and/or AR application running on MS 100. In some embodiments, example method 500 may be invoked in 505, where various initialization and housekeeping routines may be performed.

Next, in 510, a first reference frame may be obtained by performing Optical Character Recognition (OCR) on an image frame captured by a camera on the mobile stations, for example the MS 100, to locate and recognize a first text block. For example, in some embodiments, portions of 510 may be performed by an OCR application in Word Recognition Module 410.

In 520, a subsequent image frame may be selected from a set of subsequent image frames, based on parameters associated with the selected subsequent image frame. For example, in some embodiments, portions of 520 may be performed by Word Recognition Module 410. In some embodiments, camera poses for the set of subsequent image frames may be computed, for example prior to selection of the subsequent image frame. For example, in some embodiments, portions of the computation of the camera poses may be performed by the tracking module 420. In some embodiments, each camera pose is associated with a distinct subsequent image frame and/or is determined based, at least in part, on aligning the associated subsequent image frame with the first reference frame. As the selected subsequent image frame is from the set of subsequent image frames, a camera pose for the selected subsequent image frame may be computed during this process. In some embodiments, parameters associated with image frames in the set of subsequent image frames are determined based, at least in part, on the computed camera poses associated with those image frames. As the selected subsequent image frame is from the set of subsequent image frames, the parameters associated with the selected subsequent image frame may be determined during this process. In some embodiments, portions of the determination of the parameters may be performed by the tracking module 420. In some embodiments, the parameters may comprise or include one or more, or a combination thereof, of each of the following: a percentage of overlap area between the selected subsequent image frame and the first reference frame; a fraction of the first text block visible in the selected subsequent image frame, wherein the fraction is determined as a ratio of an area comprising a visible portion of the first text block in the selected subsequent image frame to a total area of the first text block; a magnitude of rotation of the selected subsequent image frame relative to the first reference frame, and a magnitude of translation of the selected subsequent image frame relative to the first reference frame.

In 530, a second reference frame may be obtained by performing OCR on the selected subsequent image frame to recognize a second text block. For example, in some embodiments, portions of 530 may be performed by an OCR application in Word Recognition Module 410.

Next, in 540, a geometric relationship between the first and second text blocks may be determined based, at least in part, on a position of the first text block in the second reference frame and a camera pose associated with the second reference frame. For example, in some embodiments, portions of 540 may be performed by text assembler module 430. In 545, control may return to the calling program and/or application such as a Computer Vision and/or AR application.

The previous description of the disclosed aspects is provided to enable any person skilled in the art to make or use various embodiments consistent with the present disclosure.

## Claims

1. A method (500) for text recognition and tracking on a mobile station, MS, the method comprising:
obtaining (510) a first reference frame by performing Optical Character Recognition, OCR, on an image frame captured by a camera on the MS to locate and recognize a first text block;
selecting (520) a subsequent image frame from a set of subsequent image frames, based on parameters associated with the selected subsequent image frame;
obtaining (530) a second reference frame by performing OCR on the selected subsequent image frame to recognize a second text block; and
determining (540) a geometric relationship between the first text block and the second text block, wherein the geometric relationship is determined based, at least in part, on:
a position of the first text block in the second reference frame, and
a camera pose associated with the second reference frame;
wherein selecting the subsequent image frame further comprises:
computing camera poses for the set of subsequent image frames, each camera pose associated with a distinct subsequent image frame and determined based, at least in part, on aligning the associated subsequent image frame with the first reference frame, and
determining, based, at least in part, on the computed camera poses, parameters associated with corresponding image frames in the set of subsequent image frames;
wherein the aligning is performed using Efficient Second-order Minimization, ESM; and
wherein the ESM operates on a lower resolution version of the associated subsequent image frame.

2. The method of Claim 1, further comprising assembling the first and second text blocks in a sequence based on the geometric relationship between the first and second text blocks.

3. The method of Claim 2, wherein the geometric relationship between the first and second text blocks is based, at least in part, on a frame of reference associated with a medium on which the text blocks appear.

4. The method of Claim 2, further comprising:
providing the assembled sequence of first and second text blocks as input to a text-to-speech application.

5. The method of Claim 1, wherein computing camera poses for the set of subsequent image frames further comprises:
generating a tracking target comprising image patches obtained by identifying a plurality of feature points in the first reference frame, and
determining a location of the tracking target in a subsequent image frame in the set based on a correspondence of image patches between the first reference frame and the subsequent image frame, and
computing a camera pose associated with the subsequent image frame based, at least in part, on the location of the tracking target in the subsequent image frame.

6. The method of Claim 5, wherein the feature points are based on natural features in the first reference frame; or
wherein individual feature points are assigned weights and feature points over the first text block are assigned a greater weight relative to feature points located elsewhere in the first reference frame.

7. The method of Claim 5, wherein generation of the tracking target is performed substantially in parallel with the aligning of the associated subsequent image frame with the first reference frame.

8. The method of Claim 1, wherein the first reference frame and the set of
subsequent image frames are markerless.

9. The method of Claim 1, wherein the parameters comprise at least one of:
a percentage of overlap area between the selected subsequent image frame and the first reference frame, or
a fraction of the first text block visible in the selected subsequent image frame, wherein the fraction is determined as a ratio of an area comprising a visible portion of the first text block in the selected subsequent image frame to a total area of the first text block, or
a magnitude of rotation of the selected subsequent image frame relative to the first reference frame, or
a magnitude of translation of the selected subsequent image frame relative to the first reference frame.

10. The method of Claim 1, wherein the camera pose is determined in 6 Degrees of Freedom, 6-DoF, wherein the camera is fronto-parallel to a planar medium comprising the text blocks.

11. The method of Claim 1, wherein the method is invoked by an Augmented Reality, AR, application;
wherein a virtual object is placed by the AR application over the first and second text blocks; and
wherein the virtual object comprises translated text from the first and second text blocks, wherein the translated text is in a language different from a language used to express the first and second text blocks.

12. An apparatus comprising:
imaging means for capturing a sequence of image frames,
means for obtaining (510) a first reference frame by performing Optical Character Recognition, OCR, on an image frame in the sequence of image frames to locate and recognize a first text block,
means for selecting (520) a subsequent image frame from the sequence of image frames, the selection based on parameters associated with the selected subsequent image frame,
means for obtaining (530) a second reference frame by performing OCR on the selected subsequent image frame to recognize a second text block, and
means for determining (540) a geometric relationship between the first text block and the second text block, wherein the geometric relationship is determined based, at least in part, on:
a position of the first text block in the second reference frame, and
a pose of the imaging means associated with the second reference frame ;
wherein the means for selecting a subsequent image frame comprises:
means for computing poses of the imaging means for the image frames in the sequence of image frames, each computed pose of the imaging means associated with a distinct image frame and determined, at least in part, by aligning the associated image frame with the first reference frame, and
means for determining based, at least in part, on the computed poses of the imaging means, parameters associated with corresponding image frames in the sequence of image frames;
wherein the aligning is performed using Efficient Second-order Minimization, ESM; and
wherein the ESM operates on a lower resolution version of the associated image frame.

13. A non-transitory computer-readable medium comprising instructions, which, when executed by a processor, perform the method of any of claims 1-11.

## Patentansprüche

1. Verfahren (500) zur Texterkennung und -verfolgung auf einer Mobilstation, MS, wobei das Verfahren umfasst:
Erhalten (510) eines ersten Referenzrahmens durch Ausführen einer optischen Zeichenerkennung, OCR, an einem Bildrahmen, der von einer Kamera in der MS aufgenommen wird, um einen ersten Textblock zu lokalisieren und zu erkennen;
Auswählen (520) eines nachfolgenden Bildrahmens aus einem Satz nachfolgender Bildrahmen basierend auf Parametern, die dem ausgewählten nachfolgenden Bildrahmen zugeordnet sind;
Erhalten (530) eines zweiten Referenzrahmens durch Ausführen einer OCR an dem ausgewählten nachfolgenden Bildrahmen, um einen zweiten Textblock zu erkennen; und
Bestimmen (540) einer geometrischen Beziehung zwischen dem ersten Textblock und dem zweiten Textblock, wobei die geometrische Beziehung zumindest teilweise basierend auf Folgendem bestimmt wird:
einer Position des ersten Textblocks im zweiten Referenzrahmen und
einer Kamerastellung, die dem zweiten Referenzrahmen zugeordnet ist;
wobei Auswählen des nachfolgenden Bildrahmens ferner umfasst:
Berechnen von Kamerastellungen für den Satz von nachfolgenden Bildrahmen, wobei jede Kamerastellung einem bestimmten nachfolgenden Bildrahmen zugeordnet wird und zumindest zum Teil basierend auf einem Ausrichten des zugehörigen nachfolgenden Bildrahmens mit dem ersten Referenzrahmen bestimmt wird, und
Bestimmen, zumindest teilweise basierend auf den berechneten Kamerastellungen, von Parametern, die entsprechenden Bildrahmen in dem Satz von nachfolgenden Bildrahmen zugeordnet sind;
wobei das Ausrichten unter Verwendung einer effizienten zweiter Ordnung Minimierung, ESM, durchgeführt wird; und
wobei die ESM auf einer Version mit niedriger Auflösung des zugehörigen nachfolgenden Bildrahmens arbeitet.

2. Verfahren nach Anspruch 1, ferner umfassend Zusammenfügen der ersten und zweiten Textblöcke in einer Sequenz basierend auf der geometrischen Beziehung zwischen den ersten und zweiten Textblöcken.

3. Verfahren nach Anspruch 2, wobei die geometrische Beziehung zwischen den ersten und zweiten Textblöcken zumindest teilweise auf einem Referenzrahmen basiert, der einem Medium zugeordnet ist, auf dem die Textblöcke erscheinen.

4. Verfahren nach Anspruch 2, ferner umfassend:
Bereitstellen der zusammengesetzten Sequenz von ersten und zweiten Textblöcken als Eingabe für eine Text-zu-Sprache-Anwendung.

5. Verfahren nach Anspruch 1, wobei das Berechnen von Kamerastellungen für den Satz nachfolgender Bildrahmen ferner umfasst:
Erzeugen eines Verfolgungsziels, das Bildpatches umfasst, die durch Identifizieren einer Vielzahl von Merkmalspunkten in dem ersten Referenzrahmen erhalten werden, und
Bestimmen eines Ortes des Verfolgungsziels in einem nachfolgenden Bildrahmen in dem Satz basierend auf einer Entsprechung von Bildpatches zwischen dem ersten Referenzrahmen und dem nachfolgenden Bildrahmen, und
Berechnen einer Kamerastellung, die mit dem nachfolgenden Bildrahmen assoziiert ist, basierend zumindest teilweise auf dem Ort des Verfolgungsziels in dem nachfolgenden Bildrahmen.

6. Verfahren nach Anspruch 5, wobei die Merkmalspunkte auf natürlichen Merkmalen in dem ersten Referenzrahmen basieren; oder
wobei individuellen Merkmalspunkten Gewichtungen zugewiesen werden und Merkmalspunkten über dem ersten Textblock eine größere Gewichtung relativ zu Merkmalspunkten, die sich an anderer Stelle im ersten Referenzrahmen befinden, zugewiesen werden.

7. Verfahren nach Anspruch 5, wobei Erzeugung des Verfolgungsziels im Wesentlichen parallel zum Ausrichten des zugehörigen nachfolgenden Bildrahmens mit dem ersten Referenzrahmen durchgeführt wird.

8. Verfahren nach Anspruch 1, wobei der erste Referenzrahmen und der Satz von
nachfolgenden Bildrahmen markerlos sind.

9. Verfahren nach Anspruch 1, wobei die Parameter mindestens eines der folgenden umfassen:
einen prozentualen Überlappungsbereich zwischen dem ausgewählten nachfolgenden Bildrahmen und dem ersten Referenzrahmen oder
einen Bruchteil des ersten Textblocks, der in dem ausgewählten nachfolgenden Bildrahmen sichtbar ist, wobei der Bruchteil als ein Verhältnis eines Bereichs bestimmt wird, der einen sichtbaren Abschnitt des ersten Textblocks in dem ausgewählten nachfolgenden Bildrahmen zu einem Gesamtbereich des ersten Textblocks umfasst, oder
eine Rotationsgröße des ausgewählten nachfolgenden Bildrahmens relativ zu dem ersten Referenzrahmen oder
eine Translationsgröße des ausgewählten nachfolgenden Bildrahmens relativ zu dem ersten Referenzrahmen.

10. Verfahren nach Anspruch 1, wobei die Kamerastellung in 6 Freiheitsgraden, 6-DoF, bestimmt wird, wobei die Kamera fronto-parallel zu einem planaren Medium ist, das die Textblöcke umfasst.

11. Verfahren nach Anspruch 1, wobei das Verfahren durch eine Augmented Reality, AR, Anwendung aufgerufen wird;
wobei ein virtuelles Objekt von der AR Anwendung über die ersten und zweiten Textblöcke platziert wird; und
wobei das virtuelle Objekt übersetzten Text aus den ersten und zweiten Textblöcken umfasst, wobei der übersetzte Text in einer Sprache vorliegt, die sich von einer Sprache unterscheidet, die verwendet wird, um die ersten und zweiten Textblöcke auszudrücken.

12. Vorrichtung, umfassend:
Abbildungsmittel zum Erfassen einer Folge von Bildrahmen,
Mittel zum Erhalten (510) eines ersten Referenzrahmens durch Ausführen einer optischen Zeichenerkennung, OCR, an einem Bildrahmen in der Folge von Bildrahmen, um einen ersten Textblock zu lokalisieren und zu erkennen;
Mittel zum Auswählen (520) eines nachfolgenden Bildrahmens aus der Folge von Bildrahmen, wobei die Auswahl auf Parametern basiert, die dem ausgewählten nachfolgenden Bildrahmen zugeordnet sind;
Mittel zum Erhalten (530) eines zweiten Referenzrahmens durch Ausführen von OCR an dem ausgewählten nachfolgenden Bildrahmen, um einen zweiten Textblock zu erkennen; und
Mittel zum Bestimmen (540) einer geometrischen Beziehung zwischen dem ersten Textblock und dem zweiten Textblock, wobei die geometrische Beziehung zumindest teilweise basierend auf Folgendem bestimmt wird:
einer Position des ersten Textblocks im zweiten Referenzrahmen und
einer Stellung des Abbildungsmittels, das dem zweiten Referenzrahmen zugeordnet ist;
wobei das Mittel zum Auswählen eines nachfolgenden Bildrahmens umfasst:
Mittel zum Berechnen von Stellungen des Abbildungsmittels für die Bildrahmen in der Folge von Bildrahmen, wobei jede Stellung des Abbildungsmittels einem bestimmten nachfolgenden Bildrahmen zugeordnet wird und zumindest zum Teil basierend auf einem Ausrichten des zugehörigen nachfolgenden Bildrahmens mit dem ersten Referenzrahmen bestimmt wird, und
Mittel zum Bestimmen, zumindest teilweise basierend auf den berechneten Stellungen des Abbildungsmittels, von Parametern, die entsprechenden Bildrahmen in der Folge von Bildrahmen zugeordnet sind;
wobei das Ausrichten unter Verwendung einer effizienten zweiter Ordnung Minimierung, ESM, durchgeführt wird; und
wobei die ESM auf einer Version mit niedriger Auflösung des zugehörigen nachfolgenden Bildrahmens arbeitet.

13. Nichtflüchtiges computerlesbares Medium umfassend Anweisungen, die, wenn sie von einem Prozessor ausgeführt werden, das Verfahren nach einem der Ansprüche 1-11 ausführen.

## Revendications

1. Procédé (500) pour la reconnaissance et le suivi de texte sur une station mobile, MS, le procédé comprenant :
l'obtention (510) d'une première trame de référence en effectuant une reconnaissance optique de caractères, OCR, sur une trame d'image capturée par une caméra sur la MS pour localiser et reconnaître un premier bloc de texte ;
la sélection (520) d'une trame d'image subséquente à partir d'un ensemble de trames d'image subséquentes, sur la base de paramètres associés à la trame d'image subséquente sélectionnée ;
l'obtention (530) d'une deuxième trame de référence en effectuant une OCR sur la trame d'image subséquente sélectionnée pour reconnaître un deuxième bloc de texte ; et
la détermination (540) d'une relation géométrique entre le premier bloc de texte et le deuxième bloc de texte, dans lequel la relation géométrique est déterminée sur la base, au moins en partie :
d'une position du premier bloc de texte dans la deuxième trame de référence, et
d'une pose de caméra associée à la deuxième trame de référence ;
dans lequel la sélection de la trame d'image subséquente comprend en outre :
le calcul de poses de caméra pour l'ensemble de trames d'image subséquentes, chaque pose de caméra étant associée à une trame d'image subséquente distincte et déterminée sur la base, au moins en partie, d'un alignement de la trame d'image subséquente associée avec la première trame de référence, et
la détermination, sur la base, au moins en partie, des poses de caméra calculées, de paramètres associés à des trames d'image correspondantes dans l'ensemble de trames d'image subséquentes ;
dans lequel l'alignement est effectué en utilisant une minimisation de deuxième ordre efficace, ESM ; et
dans lequel l'ESM fonctionne sur une version de résolution inférieure de la trame d'image subséquente associée.

2. Procédé selon la revendication 1, comprenant en outre l'assemblage des premier et deuxième blocs de texte dans une séquence basée sur la relation géométrique entre les premier et deuxième blocs de texte.

3. Procédé selon la revendication 2, dans lequel la relation géométrique entre les premier et deuxième blocs de texte est basée, au moins en partie, sur une trame de référence associée à un support sur lequel les blocs de texte apparaissent.

4. Procédé selon la revendication 2, comprenant en outre :
la fourniture de la séquence assemblée des premier et deuxième blocs de texte comme une entrée pour une application texte-parole.

5. Procédé selon la revendication 1, dans lequel le calcul de poses de caméra pour l'ensemble de trames d'image subséquentes comprend en outre :
la génération d'une cible de suivi comprenant des pastilles d'image obtenues en identifiant une pluralité de points de caractéristique dans la première trame de référence, et
la détermination d'un emplacement de la cible de suivi dans une trame d'image subséquente dans l'ensemble sur la base d'une correspondance de pastilles d'image entre la première trame de référence et la trame d'image subséquente, et
le calcul d'une pose de caméra associée à la trame d'image subséquente sur la base, au moins en partie, de l'emplacement de la cible de suivi dans la trame d'image subséquente.

6. Procédé selon la revendication 5, dans lequel les points de caractéristique sont basés sur des caractéristiques naturelles dans la première trame de référence ; ou
dans lequel des poids sont attribués à des points de caractéristique individuels et un poids supérieur est attribué à des points de caractéristique sur le premier bloc de texte par rapport à des points de caractéristique situés ailleurs dans la première trame de référence.

7. Procédé selon la revendication 5, dans lequel la génération de la cible de suivi est effectuée sensiblement en parallèle avec l'alignement de la trame d'image subséquente associée avec la première trame de référence.

8. Procédé selon la revendication 1, dans lequel la première trame de référence et l'ensemble de trames d'image subséquentes sont sans marqueur.

9. Procédé selon la revendication 1, dans lequel les paramètres comprennent au moins un parmi :
un pourcentage de zone de chevauchement entre la trame d'image subséquente sélectionnée et la première trame de référence, ou
une fraction du premier bloc de texte visible dans la trame d'image subséquente sélectionnée, dans lequel la fraction est déterminée comme un rapport d'une zone comprenant une portion visible du premier bloc de texte dans la trame d'image subséquente sélectionnée à une zone totale du premier bloc de texte, ou
une amplitude de rotation de la trame d'image subséquente sélectionnée par rapport à la première trame de référence, ou
une amplitude de translation de la trame d'image subséquente sélectionnée par rapport à la première trame de référence.

10. Procédé selon la revendication 1, dans lequel la pose de caméra est déterminée dans 6 degrés de liberté, 6-DoF, dans lequel la caméra est fronto-parallèle à un support plan comprenant les blocs de texte.

11. Procédé selon la revendication 1, dans lequel le procédé est invoqué par une application de réalité augmentée, AR ;
dans lequel un objet virtuel est placé par l'application AR sur les premier et deuxième blocs de texte ; et
dans lequel l'objet virtuel comprend un texte traduit à partir des premier et deuxième blocs de texte, dans lequel le texte traduit est dans un langage différent d'un langage utilisé pour exprimer les premier et deuxième blocs de texte.

12. Appareil comprenant :
des moyens d'imagerie pour capturer une séquence de trames d'image,
des moyens pour obtenir (510) une première trame de référence en effectuant une reconnaissance optique de caractères, OCR, sur une trame d'image dans la séquence de trames d'image pour localiser et reconnaître un premier bloc de texte,
des moyens pour sélectionner (520) une trame d'image subséquente à partir de la séquence de trames d'image, la sélection étant basée sur des paramètres associés à la trame d'image subséquente sélectionnée,
des moyens pour obtenir (530) une deuxième trame de référence en effectuant une OCR sur la trame d'image subséquente sélectionnée pour reconnaître un deuxième bloc de texte, et
des moyens pour déterminer (540) une relation géométrique entre le premier bloc de texte et le deuxième bloc de texte, dans lequel la relation géométrique est déterminée sur la base, au moins en partie :
d'une position du premier bloc de texte dans la deuxième trame de référence, et
d'une pose des moyens d'imagerie associée à la deuxième trame de référence ;
dans lequel les moyens pour sélectionner une trame d'image subséquente comprennent
des moyens pour calculer des poses des moyens d'imagerie pour les trames d'image dans la séquence de trames d'image, chaque pose calculée des moyens d'imagerie étant associée à une trame d'image distincte et déterminée, au moins en partie, en alignant la trame d'image associée avec la première trame de référence, et
des moyens pour déterminer sur la base, au moins en partie, des poses calculées des moyens d'imagerie, des paramètres associés à des trames d'image correspondantes dans la séquence de trames d'image ;
dans lequel l'alignement est effectué en utilisant une minimisation de deuxième ordre efficace, ESM ; et
dans lequel l'ESM fonctionne sur une version de résolution inférieure de la trame d'image subséquente.

13. Support lisible par ordinateur non transitoire comprenant des instructions qui, quand elles sont exécutées par un processeur, réalisent le procédé selon l'une quelconque des revendications 1 à 11.
